# EUROPÄISCHE PATENTSCHRIFT

(11) **EP 4 140 911 B1**
(45) Veröffentlichungstag und Bekanntmachung des Hinweises auf die Patenterteilung: **25.09.2024**
(21) Anmeldenummer: 22192974.8
(22) Anmeldetag: 30.08.2022
(51) Int. Cl.: B65D 43/02

(54) **KUNSTSTOFFTRINKBEHÄLTER UND VERFAHREN ZU DESSEN HERSTELLUNG**
PLASTIC DRINKING CONTAINER AND METHOD FOR THE PRODUCTION THEREOF
RÉCIPIENT À BOISSON EN MATIÈRE PLASTIQUE ET SON PROCÉDÉ DE FABRICATION

(30) Priorität: 31.08.2021 CH 0702232021
(43) Veröffentlichungstag der Anmeldung: 01.03.2023
(73) Patentinhaber: Cremo S.A., 1752 Villars-sur-Glâne (CH)
(72) Erfinder: Kienle, Erich, 6044 Udligenswil (CH)
(74) Vertreter: Keller Schneider Patent- und Markenanwälte AG

(56) Entgegenhaltungen:
- WO-A1-2018/222566
- DE-A1- 3 626 923
- DE-U1- 202017 103 020
- ES-U- 1 278 639
- IT-A1- MI20 090 594

## Beschreibung

### Technisches Gebiet

Die vorliegende Erfindung betrifft einen Trinkbehälter aus Kunststoff, mit einem Becher, der eine in eine Höhenrichtung des Trinl<behälters weisende Becheröffnung aufweist, und mit einem Trinl<decl<el zum Verschliessen der Becheröffnung.

Ferner betrifft die Erfindung ein Verfahren zur Herstellung eines Trinl<behälters aus Kunststoff, wobei eine in eine Höhenrichtung des Trinl<behälters weisende Becheröffnung eines Bechers mit einem Trinl<decl<el verschlossen wird.

### Technischer Hintergrund

Trinkbehälter Verfahren zu deren Herstellung der vorbenannten Art sind aus dem Stand der Technik bekannt. Die Trinkbehälter werden üblicherweise dafür eingesetzt, um milchhaltige I<altgetränl<e, wie beispielsweise Kaffeeprodukte, I<al<aos und Ähnliches, in Supermärkten oder Tankstellen zum freien Verkauf in Kühlregalen anzubieten. Kunden kaufen also die Trinkbehälter und verzehren darin enthaltene I<altgetränl<e in der Regel unterwegs, d. h. im Freien, im öffentlichen Verkehr und/oder in einem Kraftfahrzeug. Dafür ist es wünschenswert, dass der Trinkbehälter zum einen einfach und bequem handhabbar ist, um ein ungewolltes Verschütten seines Inhaltes möglichst zu vermeiden. Zum anderen sollte er möglichst aus einheitlich recyclebaren Materialien bestehen, um seine Entsorgung zu vereinfachen und Umweltbelastungen zu minimieren.

Beispielsweise zeigt die EP 2 757 051 B1 der Anmelderin einen Becher mit einer trennbaren Siegelfolie und einem Trinl<decl<el, wobei der Becher aus Kunststoff besteht. Der Trinl<decl<el weist einen erhöhten umlaufenden Trinl<rand auf, in den eine Trinköffnung eingeformt ist. Der Trinl<decl<el weist einen nach unten gerichteten Kragen mit Innen- oder Aussengewinde auf, an dem die Dichtfolie dichtend über den umlaufenden Trinl<rand geschweisst ist. Der Trinl<decl<el weist einen in einem Bereich der Öffnung angeordneten Riegel auf, wobei der Riegel teilweise mit dem Kragen verbunden ist. Die Siegelfolie ist aus Aluminium gefertigt und mit einer Kunststoffschicht versehen.

WO 2019/184333 A1 betrifft einen angeblich auslaufsicheren Heissgetränl<ebecherdecl<el, der wohl bequem zu öffnen ist, umfassend einen Deckelkörper, an dem eine Trinköffnung, ein Luftauslassloch und ein Lecl<aufnahmehohlraum vorgesehen ist, wobei das Luftauslassloch sich auf dem Lecl<aufnahmehohlraum befindet, der mit einem Aufschmelzloch versehen ist.

WO 2015/102667 A1 befasst sich mit einem zur Verwendung mit einem Flüssigkeitsbehälter ausgestalteten Deckel, der ein Körperelement und ein Ventil umfasst. Das Körperelement umfasst einen zentralen Körper, der sich zu einem Aussenumfang hin erstreckt, der dazu ausgestaltet ist, um an einem Rand eines Fluidbehälters befestigt zu werden.

Bei aus dem Stand der Technik bekannten Trinl<behältern sowie Deckeln dafür ist von Nachteil, dass insbesondere die Deckel verloren gehen können, so dass sie möglicherweise unerwünscht als Abfall in die Umwelt gelangen.

Des Weiteren weisen aus dem Stand der Technik bekannte Kombinationen von Trinl<behältern und Deckeln oft unterschiedliche Materialkombinationen auf, was deren Recycling erschwert. Ferner kann die Herstellung von aus dem Stand der Technik bekannten Trinl<behältern und Deckeln dafür unerwünscht hohen Materialeinsatz und entsprechend hohe Kosten involvierten. Zudem sind aus dem Stand der Technik bekannte Becher in der Regel auf ihrem oberen Rand mit einer Folie versehen, auf die ein als sog. Clipdecl<el ausgeführter Deckel aufgesetzt ist. Bevor aus dem Becher getrunken werden kann, muss der mit dem Becher verklemmte Clipdecl<el abgenommen und die Folie abgerissen werden, um dann den Clipdecl<el wieder aufzusetzen, was umständlich ist und insbesondere beim Abtrennen der aufgeschweissten oder -geklebten Folie eine oft relativ grosse Gefahr eines ungewollten Verschüttens des Becherinhaltes mit sich bringt. Auch können Clipdecl<el versehentlich abfallen sowie in öffentlich zugänglichen Verkaufsstellen von Personal oder unentschlossenen Kunden im Trinl<öffnungsbereich direkt angefasst werden, was aus hygienischen Gründen inakzeptabel ist.

DE 20 2017 103020 U1 offenbart einen Becher mit einem Trinkdeckel. Aus IT MI20 090 594 A1 ist ein Trinkbecher mit aufgeschweißtem Deckel bekannt.

### Darstellung der Erfindung

Aufgabe der Erfindung ist es, die oben genannten Nachteile aus Stand der Technik zu beseitigen oder wenigstens zu mindern. Insbesondere ist es ein Ziel der vorliegenden Erfindung, einen Trinkbehälter aus Kunststoff bereitzustellen, bei dem der Trinl<decl<el möglichst unverlierbar mit dem Becher verbunden ist und der für einen Nutzer angenehm zu greifen ist. Darüber hinaus sollten Trinkbehälter unter möglichst geringem Materialeinsatz und zu niedrigen Kosten einfach herstellbar sein.

Diese Aufgaben werden durch einen Trinkbehälter nach Anspruch 1 und ein Verfahren nach Anspruch 6 gelöst.

Insbesondere werden die Aufgaben mit erfindungsgemässen Trinkbehälter zumindest teilweise dadurch gelöst, dass der Becher und der Trinl<decl<el im Bereich der Becheröffnung miteinander verschweisst sind und dass am Trinl<decl<el eine Schürze ausgeformt ist, die sich zumindest abschnittsweise entlang eines Aussenumfanges des Bechers erstreckt und von diesem beabstandet angeordnet ist.

Bei einem erfindungsgemässen Verfahren werden die Aufgaben zumindest teilweise dadurch gelöst, dass der Becher und der Trinl<decl<el im Bereich der Becheröffnung miteinander verschweisst werden und dass am Trinl<decl<el eine Schürze ausgeformt ist, die sich zumindest abschnittsweise entlang eines Aussenumfanges des Bechers erstreckt und von diesem beabstandet angeordnet ist.

Die erfindungsgemässe Lösung hat den Vorteil, dass Becher und Trinl<decl<el zum einen unverlierbar miteinander verbunden sind. Der Trinl<decl<el kann also nicht unabsichtlich vom Behälter getrennt werden und ist ohne Schneidwerkzeuge auch nicht ohne Weiteres absichtlich davon lösbar. Darüber hinaus hilft die Verschweissung dabei, den Materialeinsatz bei der Herstellung von Trinl<behältern zu minimieren. Der Schweissprozess ist relativ schnell durchführbar und hilft somit ebenfalls dabei, Herstellungszeiten und damit -kosten zu senken. Beispielsweise ist die Verschweissung durch Thermo- und/oder Hochfrequenzschweissen realisierbar. Die erfindungsgemässe Schürze deckt die Schweissnaht seitlich ab. Zum einen kann dies aus ästhetischen Gründen von Vorteil sein. Zum anderen hilft dies dabei, die Haptik des Trinl<behälters zu verbessern, indem die Schürze im Bereich der Schweissnaht etwaige scharfe Kanten o. ä. abdeckt.

Die erfindungsgemässe Lösung kann durch folgende weitere, jeweils für sich vorteilhafte Ausführungsformen beliebig ergänzt und weiter verbessert werden, wobei ein Fachmann von sich aus und ohne Weiteres klar und eindeutig erkennt, dass Vorrichtungsmerkmale eines erfindungsgemässen Trinl<behälters bzw. dessen Bestandteile analog Schritte eines erfindungsgemässen Verfahrens darstellen können und umgekehrt:
Gemäss einer erfindungsgemässen Ausführungsform eines Trinl<behälters ist vorgesehen, dass der Becher im Bereich der Becheröffnung einen aussenumfangsseitig umlaufenden Becherflansch aufweist, an den der Trinl<decl<el angeschweisst ist. Der Becherflansch kann eine definierte Auflagefläche für den Trinl<decl<el bereitstellen, sodass dieser besonders einfach, schnell und verlässlich mit dem Becher verschweissbar ist. Des Weiteren kann der Becherflansch dabei helfen, die Stabilität des Trinl<behälters zu verbessern.

Gemäss einer erfindungsgemässen Ausführungsform eines Trinl<behälters ist vorgesehen, dass der Trinl<decl<el einen aussenumfangsseitig umlaufenden Deckelflansch aufweist, mit dem der Trinl<decl<el auf einem oberen Becherrand aufliegt. Der Deckelflansch hilft dabei, ähnlich wie der Becherflansch, eine definierte Auflagefläche zwischen Becher und Trinl<decl<el bereitzustellen. Entlang des Deckelflansches lässt sich die Schweissnaht derart anordnen, dass eine stabile Verbindung zwischen Becher und Trinl<decl<el geschaffen werden kann.

Gemäss einer erfindungsgemässen Ausführungsform eines Trinl<behälters ist vorgesehen, dass eine Decl<elschweissfläche des Trinl<decl<els auf dem Becherrand bzw. der Deckelflansch auf dem Becherflansch oben aufliegt. Optimalerweise liegen Deckelflansch und Becherflansch mit Decl<elschweissfläche bzw. Becherschweissfläche im verschweissten Zustand bündig aneinander. Somit kann bei möglichst geringem Materialeinsatz ein stabiler Trinkbehälter bereitgestellt werden.

Gemäss einer erfindungsgemässen Ausführungsform eines Trinl<behälters ist ein am Trinl<decl<el ausgeformter Kragen vorgesehen, der sich zumindest abschnittsweise durch die Becheröffnung hindurch in den Becher hinein erstreckt und von einem Innenumfang des Bechers beabstandet angeordnet ist. Mit anderen Worten kann also ein Spiel zwischen Kragen und Becher vorgesehen sein. Der Kragen hilft dabei, ein schnelles und präzises Aufsetzen des Trinl<decl<els auf den Behälter vor dem Verschweissen zu ermöglichen. Auch kann der Kragen dabei helfen, während des Schweissprozesses in den Trinkbehälter eingebrachte Energie von restlichen Abschnitten des Trinl<behälters, insbesondere dessen Innenraum, fernzuhalten.

Bei einem Verfahren zur Herstellung eines Trinl<behälters kann die erfindungsgemässe Lösung weiter dadurch verbessert werden, dass der Becher und der Trinl<decl<el in einem befüllten Zustand des Bechers miteinander verschweisst werden. Somit können Herstellungszeiten weiter verringert und daher Kosten zur Herstellung eines erfindungsgemässen Trinl<behälters weiter minimiert werden. Zudem kann bei einer Befüllung des Bechers vor dem Verschweissen weitestgehend unabhängig von einem Querschnitt einer sonst anzuwendenden Befüll- bzw. Trinl<- und oder Auslassöffnung befüllt werden, was zum einen hohe Befüllgeschwindigl<eiten ermöglicht und zum anderen Flexibilität bei der Beschaffenheit mit dem Becher zu befüllender Medien ermöglicht.

Gemäss einer erfindungsgemässen Ausführungsform eines Verfahrens ist vorgesehen, dass im Bereich der Becheröffnung im unverschweissten Zustand eine die Becheröffnung umlaufende Wulst ausgeformt ist, die als Schweissgut dient. Durch Ausformung der Wulst steht eine vorbestimmte Menge von Material zu Bildung einer Schweissnaht zwischen Becher und Trinl<decl<el bereit. Dies hilft dabei, die Zuverlässigkeit und Stabilität der Verschweissung zu verbessern.

Gemäss einer erfindungsgemässen Ausführungsform eines Verfahrens ist vorgesehen, dass die Wulst in einem äusseren Randbereich des Becherflansches angeordnet ist und sich in Höhenrichtung vom Becherflansch weg erstreckt. Somit kann ebenfalls die Schweissnaht im äusseren Randbereich des Becherflansch angeordnet sein, wo sie für einen bündigen Abschluss zwischen Becher und Trinl<decl<el sorgt. Die Anordnung der Schweissnaht im äusseren Randbereich des Becherflansches kann zusätzlich dabei helfen, Kerbwirkungen zu mindern, die zu einem ungewollten Öffnen der Schweissnaht beitragen könnten.

Gemäss einer erfindungsgemässen Ausführungsform eines Verfahrens ist vorgesehen, dass die Wulst über eine Fase in einen aussenumfangsseitigen Seitenabschnitt des Becherflansches übergeht. Die Fase kann dabei helfen, einen bündigen Abschluss zwischen Becher und Trinl<decl<el weiter zu verbessern sowie Kerbwirkungen weiter zu mindern. Auch kann die Fase dabei helfen, ein präzises Aufsetzen des Trinkdeckels auf den Becher vor dem Verschweissen zu vereinfachen.

Gemäss einer erfindungsgemässen Ausführungsform eines Verfahrens ist vorgesehen, dass die Wulst im unverschweissten Zustand einen dreieckigen Querschnitt aufweist, wobei die Wulst an einem Schenkel des Dreiecks in eine Becherschweissfläche bzw. den Becherflansch übergeht. Mit anderen Worten weist eine Ecke des dreieckigen Querschnitts der Wulst im unverschweissten Zustand in Richtung des Deckels. Dies hilft zum einen dabei, die Schweissnaht möglichst präzise durch die Spitze des Dreiecks vorgegeben anzuordnen. Zum anderen hilft die in Richtung des Trinl<decl<els weisende freie Spitze des Dreiecks bei der Initiierung des Schweissvorganges, indem beim Einbringen der Schweissenergie zuerst die Spitze aufschmilzt und dann die Wulst von der Spitze herab bis zum Übergang zwischen Wulst und Becherflansch aufgeschmolzen wird. Somit können Schweissenergie und Zeit zur Herstellung der Schweissnaht minimiert werden.

Gemäss einer erfindungsgemässen Ausführungsform eines Verfahrens ist vorgesehen, dass der Querschnitt der Wulst im unverschweissten Zustand als rechtwinkliges Dreieck ausgestaltet ist. Durch die Ausgestaltung des Querschnitts der Wulst als rechtwinkliges Dreieck hat die vor dem Verschweissen in Richtung des Trinl<decl<els weisende Spitze einerseits eine notwendige Stabilität, um beim Aufsetzen des Trinl<decl<els nicht abzuknicken. Andererseits ist die Spitze vordefiniert aufschmelzbar zur präzisen Herstellung der Schweissnaht.Gemäss einer erfindungsgemässen Ausführungsform eines Verfahrens ist vorgesehen, dass der Becher und der Trinl<decl<el durch Ultraschallschweissen miteinander verschweisst werden. Mittels Ultraschall kann sehr gezielt und energiesparend die zum Herstellen der Verschweissung notwendige Energie bereitgestellt werden. Ultraschallschweissverfahren sind schnell und in der Praxis erprobt.

Gemäss einer erfindungsgemässen Ausführungsform eines Verfahrens ist vorgesehen, dass vor dem Verschweissen von Becher und Trinl<decl<el eine Trinköffnung im Trinl<decl<el mittels einer Folie verschlossen wird. Bei der Folie kann es sich beispielsweise um eine abtrennbare Versiegelungsfolie handeln, die über einen erhöhten, umlaufenden Trinl<rand des Trinl<decl<els mit dem Trinl<rand dichtend verschweisst und/oder verklebt ist und eine über den Trinl<rand nach aussen und unten sich erstreckende, im Bereich einer Trinköffnung befindliche Lasche aufweist, die mindestens teilweise mit der Schürze am Trinl<decl<el verbunden ist. Die Lasche kann über dem äusseren nach unten gerichteten Trinl<rand hinweg mit dem Becher verklebt sein.

Des Weiteren kann am umlaufenden Trinl<rand der Trinköffnung diametral gegenüberliegend eine Lüftungsöffnung im Trinl<decl<el ausgeformt sein, die von der abtrennbaren Folie dichtend abgedeckt ist. Ein oberhalb einer Decke des Trinl<decl<els zumindest abschnittsweise durch den umlaufenden Trinl<rand vorgegebener Stauraum kann durch die abtrennbaren Versiegelungsfolie abgedichtet verschlossen sein. Im Stauraum können Zugaben, wie beispielsweise Portionen von Süssstoff, Zucker, Gebäck, Schokolade, Geschmacl<szugaben, o.ä. untergebracht sein.

Die Folie kann aus Aluminium hergestellt und auf ihrer zum Trinl<decl<el hingewandten Seite zumindest abschnittsweise mit einer PE-LD oder PE-LLD Kunststoffschicht überzogen sein, während die gegenüberliegende Seite der Aluminiumfolie zumindest abschnittsweise mit einer Kunststoffschicht aus PE-HD beschichtet sein kann. Der Trinl<decl<el kann im Bereich der Trinköffnung einen verbreiterten Bereich am umlaufenden Trinl<rand aufweisen und die Folie eine Lasche besitzen, die im Wesentlichen und/oder wenigstens so breit wie die Verbreiterung des Trinkrandes ist und über den angrenzenden Schenkel des Trinkrandes hinunterragt, um so einen Hygieneschutz in einem Abschnitt des Trinl<decl<els zu bilden, an den ein Konsument beim Trinken aus dem Trinkbehälter üblicherweise seinen Mund ansetzt. Somit bringt die erfindungsgemässe Verlagerung der Folie von der Becheroberseite auf die Trinkdeckeloberseite den Vorteil, dass der erfindungsgemässe Trinkbehälter sowohl einfach und schnell geöffnet werden kann als auch höchsten Hygieneanforderungen entspricht.

Durch Verschluss des Trinl<decl<els bzw. darin ausgeformter Öffnungen mittels der Folie lässt sich der Trinl<decl<el für das Verschweissen mit dem Becher vorkonfektionieren. Die Folie kann zumindest abschnittsweise transparent ausgestaltet sein, um beispielsweise einen Einblick in den durch die Folie verschlossenen Stauraum im Trinl<decl<el zu gewähren.

### Kurze Erläuterung zu den Figuren

Zum besseren Verständnis vorliegender Erfindung wird nachfolgend auf hier beigefügte Zeichnungen Bezug genommen. Diese zeigen lediglich mögliche Ausführungsbeispiele des Erfindungsgegenstandes, wobei dessen Merkmale, wie oben beschrieben ist, entsprechend jeweiliger Anforderungen beliebig miteinander kombiniert oder weggelassen werden können.

Es zeigen:
- Fig. 1: eine schematische Querschnittsansicht eines erfindungsgemässen Trinl<behälters mit Becher und Trinl<decl<el im miteinander verschweissten Zustand;
- Fig. 2: ein Detail I des in Fig. 1 dargestellten Trinl<behälters;
- Fig. 3: eine schematische Querschnittsansicht des Bechers des in Fig. 1 dargestellten Trinl<behälters;
- Fig. 4: ein Detail III des in Fig. 3 dargestellten Bechers;
- Fig. 5: eine schematische Unteransicht des Trinl<decl<els des in Fig. 1 und 2 dargestellten Trinl<behälters.
- Fig. 6: eine schematische Querschnittsansicht des in Fig. 5 gezeigten Trinl<decl<els zusammen mit einer Folie; und
- Fig. 7: ein Detail VI des in Fig. 6 dargestellten Trinl<decl<els.

### Wege zur Ausführung der Erfindung

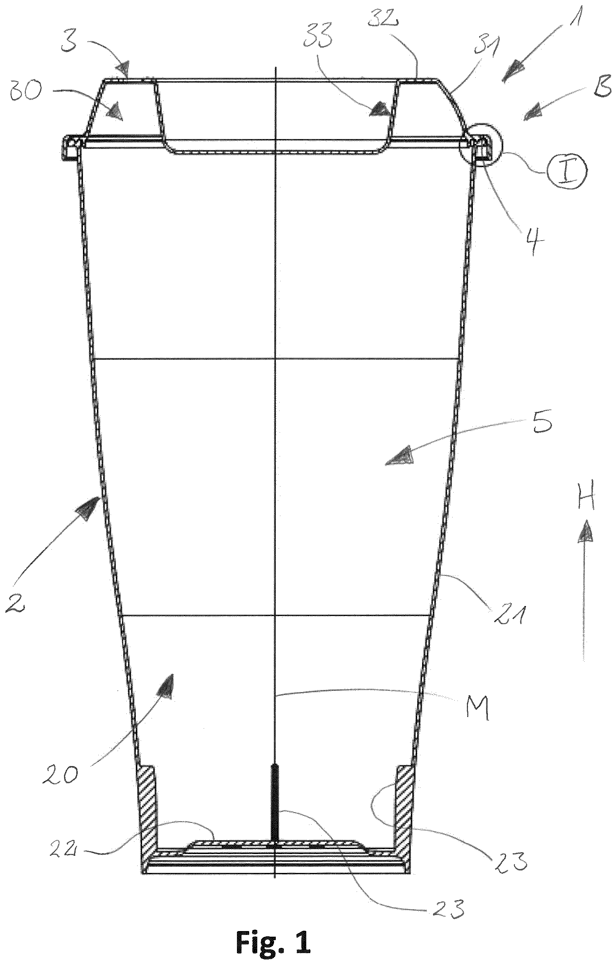

Fig. 1 zeigt ein eine schematische Querschnittsansicht eines erfindungsgemässen Trinl<behälters 1 mit einem Becher 2 und einem Trinl<decl<el 3 in einem miteinander verschweissten Zustand B, in welchem der Becher 2 und der Trinl<decl<el 3 über eine Schweissnaht 4 stoffschlüssig miteinander verbunden sind. Somit verschliesst der Trinl<decl<el 3 einen Behälterinnenraum 5 des Behälters 1 zur Aufnahme einer Flüssigkeit (nicht gezeigt), insbesondere eines Getränkes, wie beispielsweise eines I<altgetränl<es ab. Der Becher 2 kann insbesondere aus Polypropylen (PP) und der Trinl<decl<el 3 insbesondere aus Polypropylen (PP) oder "high density polyethylene" (HDPE) gefertigt sein.

Der Behälterinnenraum 5 ist im Wesentlichen von einem Becherinnenraum 20 des Bechers 2 gebildet und erstreckt sich in einer im Wesentlichen parallel zu einer Mittelachse M des Behälters 1 verlaufenden Höhenrichtung H des Behälters 1 teilweise bis in einen Deckelinnenraum 30 des Trinl<decl<els 3 hinein. Der Becherinnenraum 20 ist von einer Becherwand 21 seitlich, d. h. im Wesentlichen quer zur Höhenrichtung H, sowie von einem Becherboden 22 unten, d. h. entgegen der Höhenrichtung H, begrenzt. Der Deckelinnenraum 30 ist von einer Deckelwand 31 seitlich sowie von einer Deckeldecke 32 oben, d. h. in Höhenrichtung H, begrenzt. In einem Übergangsbereich zwischen Becherwand 21 und Becherboden 22 sind Stapelrippen 23 ausgeformt, die ein Übereinanderstapeln einer Vielzahl leerer Becher 2 erleichtern. Deckelwand 31 und Decl<eldecl<e 32 sind derart ausgeformt, dass sie einen Trinl<rand 33 ausbilden, der einem Konsumenten (nicht gezeigt) das Ansetzen des Mundes am Behälter 1 beim Trinken vereinfacht.

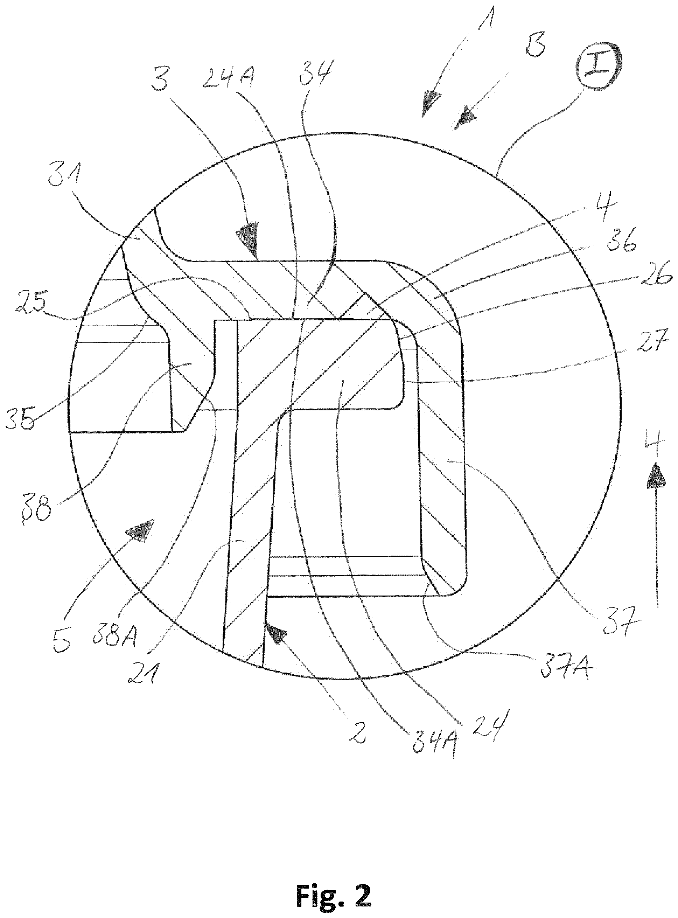

Fig. 2 zeigt ein Detail I des in Fig. 1 dargestellten Trinl<behälters 1. Der Becher 2 besitzt einen Becherflansch 24, der im Bereich eines in Höhenrichtung H weisenden oberen Becherrandes 25 die Becherwand 21 aussenumfangsseitig umläuft. Der Trinl<decl<el 3 besitzt einen
Deckelflansch 34, der im Bereich eines entgegen der Höhenrichtung H weisenden unteren Becherrandes 35 die Becherwand 31 aussenumfangsseitig umläuft. Im verschweissten Zustand B liegen Becherflansch 24 und Deckelflansch 34 vorzugsweise im Wesentlichen bündig aneinander an. Die Schweissnaht 4 befindet sich auf der Oberseite des Becherflansch 24 und auf der Unterseite des Deckelflansches 34. Mit anderen Worten sind Becher 2 und Trinl<decl<el 3 im Bereich von Becherflansch 24 und Deckelflansch 34 bündig umlaufend miteinander verschweisst.

Als jeweilige Auflageflächen an Becher 2 und Trinl<decl<el 3 dienen eine von der Oberseite des Becherflansches 24 gebildete Becherschweissfläche 24A, die auch als Becherauflagefläche angesehen werden kann, und eine von der Unterseite des Deckelflansches 34 gebildete Decl<elschweissfläche 34A, die auch als Deckelauflagefläche angesehen werden kann. Mit anderen Worten liegt der Trinl<decl<el 3 mit seiner Decl<elschweissfläche 34A an der Becherschweissfläche 24A anliegend oben auf dem Becherrand 25 auf. Der Becherrand 25 kann die Becherschweissfläche 24A umfassen bzw. mit dieser fluchtend in sie übergehend ausgestaltet sein.

Die Schweissnaht 4 erstreckt sich zwischen Becherschweissfläche 24A und Decl<elschweissfläche 34A, die somit stoffschlüssig miteinander verbunden sind, und verläuft in einem äusseren Randbereich des Bechers 2 bzw. Becherflansches 24, wo eine Fase 26 zwischen der Schweissnaht 4 und einem aussenumfangsseitigen Seitenabschnitt 27 des Bechers 2 bzw. Becherflansches 24 ausgeformt ist. Eine über eine Krümmung 36 mit dem Deckelflansch 34 verbundene, den Trinl<decl<el 3 aussenumfangsseitig umlaufende Schürze 37 deckt den Seitenabschnitt 27 seitlich ab und ist davon beabstandet angeordnet. An ihrem unteren freien Ende ist die Schürze 37 mit einer innenseitig umlaufenden Einlaufschräge 37A versehen, die ein Aufsetzen des Trinl<decl<els 3 auf den Becher 2 vereinfacht. Vom Deckelrand 35 entgegen der Höhenrichtung H nach unten weg erstreckt sich ein Kragen 38 des Trinl<decl<els 3, der von einer in Richtung des Becherinnenraumes 20 weisenden Innenseite der Becherwand 21 beabstandet angeordnet ist und in seinem unteren Endabschnitt eine aussenumfangsseitig umlaufende Einführschräge 38A besitzt, die ein Einführen des Kragens 38 in den Becher 2 vereinfacht.

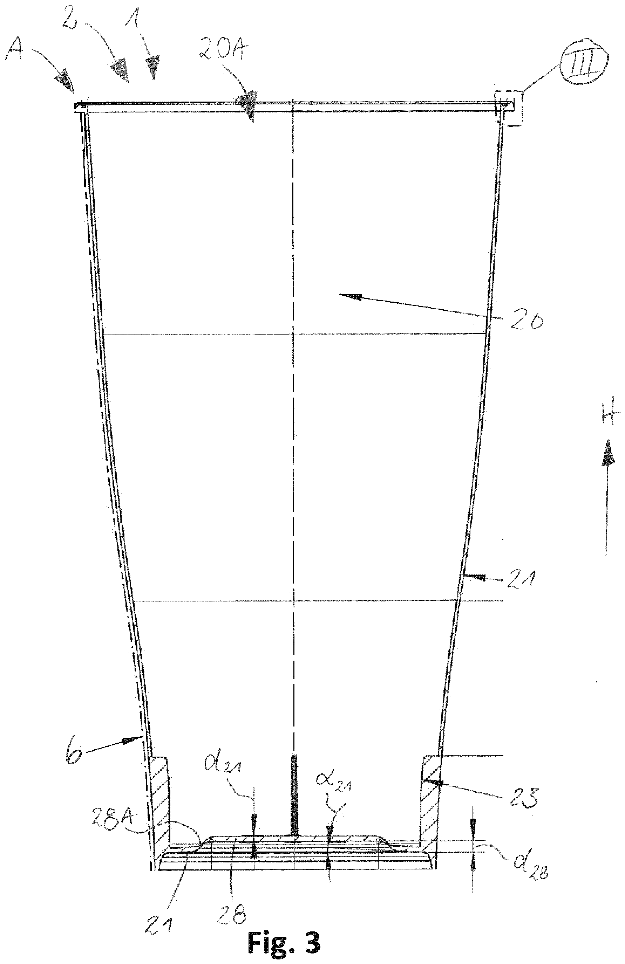

Fig. 3 zeigt eine schematische Querschnittsansicht des Bechers 2 des in Fig. 1 dargestellten erfindungsgemässen Trinl<behälters 1 in einem unverschweissten Zustand A, in dem eine in Richtung H weisende Becheröffnung 20A zum Becherinnenraum 20 des Bechers 2 nicht durch den Trinl<decl<el 3 verschlossen ist. Im Becherboden 21 ist eine Einbuchtung 28 ausgeformt, in deren Bereich der Becherboden 21 mit einer parallel zur Höhenrichtung H gemessenen Tiefe d₂₈ der Einbuchtung 28 in Richtung zum Becherinnenraum 20 hin gegenüber einem äusseren Randbereich des Becherbodens 21 versetzt ist. Die Einbuchtung 28 ist über einen im Querschnitt im Wesentlichen S-förmigen Übergangsabschnitt 28A mit dem äusseren Randbereich des Becherbodens 21 verbunden. Im Bereich des Übergangsabschnitts 28A ist eine Dicke d₂₁ des Becherbodens 21 gegenüber seinem Mittelbereich und äusserem Randbereich verringert. Der Becherboden 21 verläuft in seinem äusseren Randbereich mit einem Neigungswinkel α₂₁ von zwischen 1° und 5°, vorzugsweise zwischen 2° und 4°, höchst vorzugsweise um 3° gegenüber dem Mittelbereich des Becherbodens 21 in Richtung zum Innenraum 20 hin angewinkelt.

Ferner ist auf der äusseren Seite der Becherwand 21 ein Label 6 des Trinl<behälters 21 angebracht. Das Label 6 kann beispielsweise mit Informationen über den Becherinhalt bedruckt sein. Das Label 6 kann auf den Becher geklebt und/oder gedruckt sein sowie als sog. "Sleeve" nach der Herstellung des Bechers an diesem angebracht bzw. aufgeschoben oder im Verlaufe eines Spritzgussprozesses als sog. "In-Mold-Label" appliziert werden.

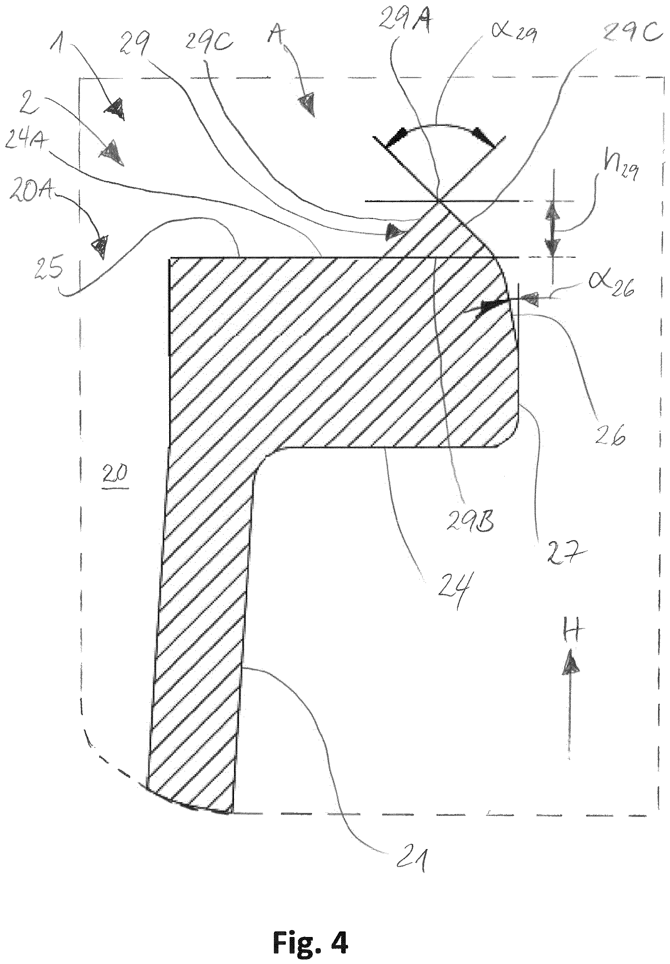

Fig. 4 zeigt ein Detail III des in Fig. 1 dargestellten Bechers 2. Hier wird deutlich, dass sich im unverschweissten Zustand A eine Wulst 29 vom Becherflansch 24 bzw. Becherrand 25 in Höhenrichtung H nach oben weg erstreckt. Die Wulst 29 hat einen im wesentlichen dreieckigen Querschnitt mit einer in Höhenrichtung H vom Becher 2 wegweisenden Spitze 29A, einem unteren Schenkel 29B, über den die Wulst 29 in die Becherschweissfläche 24A am Becherflansch 24 bzw. den Becherrand 25 übergeht, und zwei Seitenschenkel 29C. Die Wulst 29 besitzt eine parallel zur Höhenrichtung H gemessene Höhe h₂₉. Der dreieckige Querschnitt der Wulst 29 ist vorzugsweise als rechtwinkliges Dreieck ausgestaltet, wodurch ein zwischen den Seitenschenkeln 29C gemessener Dreiecl<swinl<el im Wesentlichen 90° beträgt. Ferner beträgt ein gegenüber dem Seitenabschnitt 27 gemessener Fasenwinkel α₂₆ der Fase 26 zwischen 5° und 15°, vorzugsweise zwischen 8° und 12°, höchst vorzugsweise 10°.

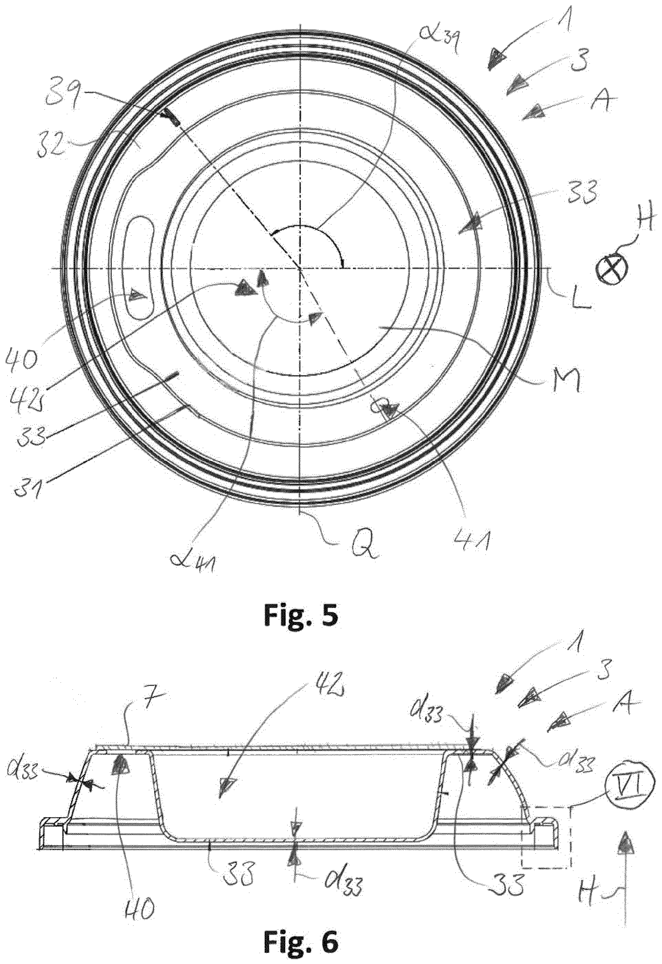

Fig. 5 zeigt eine schematische Unteransicht des Trinl<decl<els 3 des in Fig. 1 und 2 dargestellten Trinl<behälters 1 im unverschweissten Zustand A. Hier wird deutlich, dass auf einer Oberseite des Trinl<decl<els 3 eine Positionierhilfe 39 in Form eines sich entgegen der Höhenrichtung H von der Decl<eldecl<e 32 weg erstreckenden Vorsprungs angeordnet ist, die längserstreckt in Richtung zur Mittelachse M des Behälters 1 hin verläuft und dabei hilft, den Trinkbehälter 1 bzw. Trinl<decl<el 3 in einer Drehrichtung um die Mittelachse M zu positionieren und/oder deren Position festzustellen. Im Trinl<rand 33 sind eine Trinköffnung 40 und eine Lüftungsöffnung 41 ausgeformt. Zwischen Positionierhilfe 39 und einer durch Trinköffnung 40 und Mittelachse M verlaufender Längsachse L des Trinl<decl<els 3 ist ein vordefinierter Positionierwinkel α₃₉ vorgesehen, der zwischen 110° und 150°, vorzugsweise zwischen 120° und 140°, höchst vorzugsweise 130° beträgt.

Zwischen Trinköffnung 40 und Lüftungsöffnung 41 ist ein vordefinierter Lüftungswinl<el α₄₁ vorgesehen, der zwischen 100° und 140°, vorzugsweise zwischen 110° und 130°, höchst vorzugsweise 120° beträgt, wodurch die Lüftungsöffnung 41 auf einer bezüglich einer quer zur Längsachse L verlaufenden Querachse Q des Trinl<decl<els 3 gegenüberliegenden Seite des Trinl<rahmens 33 angeordnet ist. Mit anderen Worten liegt die Trinköffnung 40 bezüglich der Querachse Q in einer Hälfte des Trinl<decl<els 3 und die Lüftungsöffnung 41 liegt in einer anderen Hälfte des Trinl<decl<els 3. Insbesondere liegt die Lüftungsöffnung 41 in einem von Längsachse L und Querachse Q begrenzten Viertel des Trinl<decl<els 3 von der Längsachse L beabstandet angeordnet, wobei ein Abstand der Lüftungsöffnung 41 von der Längsachse L vorzugweise grösser ist als in Abstand der Lüftungsöffnung 41 von der Querachse Q. Ferner ist im Trinl<decl<el 2 entgegen der Höhenrichtung H zurückversetzt ein Stauraum 42 ausgeformt, in dem Zugaben untergebracht sein können.

Fig. 6 zeigt eine schematische Querschnittsansicht des in Fig. 5 gezeigten Trinl<decl<els 3 zusammen mit einer Folie 7. Trinköffnung 40, Lüftungsöffnung 41 und/oder Stauraum 42 sind mithilfe der Folie 7 von oben verschlossen, die beispielsweise an den Deckel 3 angeschweisst und/oder angeklebt sowie zumindest abschnittsweise transparent ausgestaltet sein kann. Durch Verschluss mit der Folie 7 ist der Trinkdeckel 3 umfassend optional eine im Stauraum 42 aufgenommene Zugabe (nicht gezeigt) zum Verschweissen mit dem Becher 2 vorkonfektioniert, insbesondere für den Fall, dass der Becher 2 befüllt ist und anschliessend per Aufsetzen des Trinl<decl<els 3 verschlossen wird. Die erfindungsgemässe Anordnung der Lüftungsöffnung 41 hilft dabei, selbst bei einem nicht vollständigen Abziehen der Folie 7, wobei diese beispielsweise an einem der Trinköffnung 40 gegenüberliegenden Seite des Randbereiches 33 mit den Randbereich 33 verbunden bleibt, trotzdem sowohl Trinköffnung 40 als auch Lüftungsöffnung 41 zu öffnen, um so ein Trinken aus dem Trinkbehälter 1 durch die Trinköffnung 40 hindurch unter gleichzeitiger Luftzufuhr in den Trinkbehälter 1 über die Lüftungsöffnung 41 zwecks Druckausgleich zu ermöglichen. Ferner wird deutlich, dass die Deckeldecke 33 eine im Wesentlichen uniforme Deckeldeckendicke d₃₃ aufweist.

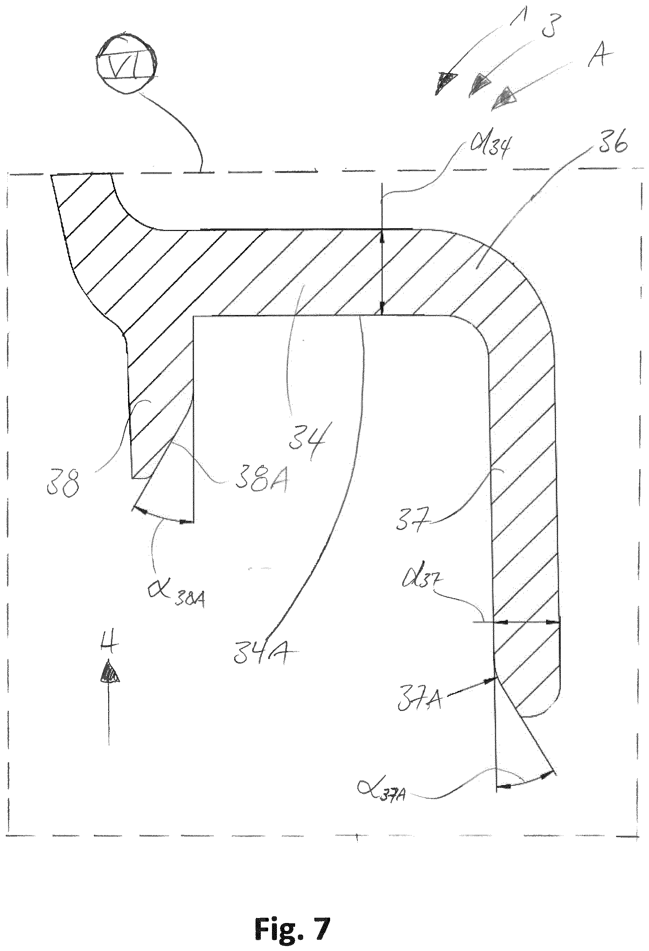

Fig. 7 zeigt ein Detail VI des in Fig. 6 dargestellten Trinl<decl<els 3. Der Deckelflansch 34 besitzt eine Deckelflanschdicke d₃₄, die grösser ist als die Decl<eldecl<endicl<e d₃₃ und eine Schürzendicl<e d₃₇ der Schürze 37. Im Bereich der Krümmung 36 verjüngt sich der Deckelflansch 34 zur Schürze 37 hin. Ein gegenüber der Längserstreckung der im Wesentlichen parallel zur Höhenrichtung H verlaufenden Schürze 37 gemessener Einlaufschrägenwinl<el α_{37A} der Einlaufschräge 37A beträgt zwischen 20° und 40°, vorzugsweise zwischen 25° und 35°, höchst vorzugsweise 30°. Ein gegenüber der Längserstreckung des im Wesentlichen parallel zur Höhenrichtung H verlaufenden Kragens gemessener Einführschrägenwinl<el α_{33A} der Einführschräge 38A beträgt ebenfalls zwischen 20° und 40°, vorzugsweise zwischen 25° und 35°, höchst vorzugsweise 30°. Die Decl<elschweissfläche 34A ist nach unten, also entgegen der Höhenrichtung H weisend, zwischen Schürze 37 und Kragen 38 senkrecht zu diesen verlaufend angeordnet.

Abwandlungen der oben beschriebenen Ausführungsbeispiele sind im Rahmen der beanspruchten Erfindung möglich.

### Bezeichnungsliste

| | | | |
|---|---|---|---|
| 1 | Trinkbehälter | 36 | Krümmung |
| 2 | Becher | 37 | Schürze |
| 3 | Deckel | 37A | Einlaufschräge |
| 4 | Schweissnaht | 38 | Kragen |
| 5 | Behälterinnenraum | 38A | Einführschräge |
| 6 | Label | 39 | Positionierhilfe |
| 7 | Folie | 40 | Trinköffnung |
| | | 41 | Lüftungsöffnung |
| 20 | Becherinnenraum | 42 | Stauraum |
| 20A | Becheröffnung | | |
| 21 | Becherwand | d2, | Becherbodendicl<e |
| 22 | Becherboden | d₃₃ | Decl<eldecl<endicl<e |
| 23 | Stapelrippen | d34 | Decl<elflanschdicl<e |
| 24 | Becherflansch | d3, | Schürzendicl<e |
| 24A | Becherschweissfläche / Becherauflagefläche | h29 | Wulsthöhe |
| | | t₂₈ | Einbuchtungstiefe |
| 25 | Becherrand | | |
| 26 | Fase | A | unverschweisster Zustand |
| 27 | Seitenabschnitt | B | verschweisster Zustand |
| 28 | Einbuchtung | H | Höhenrichtung |
| 29 | Wulst | L | Längsachse |
| 29A | Spitze | M | Mittelachse |
| 29B | unterer Schenkel | Q | Querachse |
| 29C | Seitenschenkel | | |
| 30 | Deckelinnenraum | α₂₁ | Becherbodenneigungswinl<el |
| 31 | Deckelwand | α₂₆ | Fasenwinkel |
| 32 | Decl<eldecl<e | α₂₉ | Dreiecl<swinl<el Wulstquerschnitt |
| 33 | Trinl<rand | α_{37A} | Einlaufschrägenwinl<el |
| 34 | Deckelflansch | α_{38A} | Einführschrägenwinl<el |
| 34A | Decl<elschweissfläche / Deckelauflagefläche | α₃₉ | Positionierwinkel |
| | | α₄₁ | Lüftungswinl<el |
| 35 | Deckelrand | | |

## Patentansprüche

1. Trinkbehälter (1) aus Kunststoff, mit einem Becher (2), der eine in eine Höhenrichtung (H) des Trinl<behälters (1) weisende Becheröffnung (20A) aufweist, und mit einem Trinkdeckel (3) zum Verschliessen der Becheröffnung (20A), an dem eine Schürze (37), die sich zumindest abschnittsweise entlang eines Außenumfanges des Bechers (2) erstreckt, ausgeformt ist, **dadurch gekennzeichnet, dass** der Becher (2) und der Trinl<decl<el (3) im Bereich der Becheröffnung (20A) miteinander verschweisst sind, und die Schürze (37) vom Außenumfang des Bechers (2) beabstandet angeordnet ist.

2. Trinkbehälter (1) nach Anspruch 1, **dadurch gekennzeichnet, dass** der Becher (2) im Bereich der Becheröffnung (20A) einen aussenumfangsseitig umlaufenden Becherflansch (24) aufweist, an den der Trinl<decl<el (3) angeschweisst ist.

3. Trinkbehälter (1) nach Ansprüche 1 oder 2, **dadurch gekennzeichnet, dass** der Trinl<decl<el (3) einen aussenumfangsseitig umlaufenden Deckelflansch (34) aufweist, mit dem der Trinl<decl<el (3) auf einem oberen Becherrand (25) aufliegt.

4. Trinkbehälter (1) nach Anspruch 3, **dadurch gekennzeichnet, dass** eine Decl<elschweissfläche (34A) des Trinl<decl<els (3) auf dem Becherrand (25) oben aufliegt.

5. Trinkbehälter (1) nach einem der oben genannten Ansprüche, **gekennzeichnet durch** einen am Trinl<decl<el (3) ausgeformten Kragen (38), der sich zumindest abschnittsweise durch die Becheröffnung (20A) hindurch in den Becher (2) erstreckt und von einem Innenumfang des Bechers (2) beabstandet angeordnet ist.

6. Verfahren zur Herstellung eines Trinl<behälters (1) aus Kunststoff, wobei eine in eine Höhenrichtung (H) des Trinl<behälters (1) weisende Becheröffnung (20A) eines Bechers (2) mit einem Trinl<decl<el (3) verschlossen wird, wobei am Trinl<decl<el (3) eine Schürze (37) ausgeformt ist, die sich zumindest abschnittsweise entlang eines Aussenumfanges des Bechers (2) erstreckt und von diesem beabstandet angeordnet ist, wobei der Becher (2) und der Trinl<decl<el (3) im Bereich der Becheröffnung (20A) miteinander verschweisst werden.

7. Verfahren nach Anspruch 6, wobei im Bereich der Becheröffnung (20A) im unverschweissten Zustand eine die Becheröffnung (20A) umlaufende Wulst (29) ausgeformt ist, die als Schweissgut dient, und wobei der Becher (2) im Bereich der Becheröffnung (20A) einen aussenumfangsseitig umlaufenden Becherflansch (24) aufweist, an den der Trinl<decl<el (3) verschweisst wird.

8. Verfahren nach Anspruch 7, wobei die Wulst (29) in einem äusseren Randbereich des Becherflansches (24) angeordnet ist und sich in Höhenrichtung (H) vom Becherflansch (24) weg erstreckt.

9. Verfahren nach Anspruch 8, wobei die Wulst über eine Fase (26) in einen aussenumfangsseitigen Seitenabschnitt (27) des Becherflansches (24) übergeht.

10. Verfahren nach einem der Ansprüche 7 bis 9, wobei die Wulst (29) im unverschweissten Zustand einen dreieckigen Querschnitt aufweist, wobei die Wulst (29) an einem Schenkel (29B) des Dreiecks in eine Becherschweissfläche 24A übergeht

11. Verfahren nach Anspruch 10, wobei der Querschnitt der Wulst (29) im unverschweissten Zustand als rechtwinkliges Dreieck ausgestaltet ist

12. Verfahren nach einem der Ansprüche 6 bis 11, **dadurch gekennzeichnet, dass** der Becher (2) und der Trinl<decl<el (3) in einem befüllten Zustand des Bechers (2) miteinander verschweisst werden.

13. Verfahren nach einem der Ansprüche 6 bis 12, **dadurch gekennzeichnet, dass** der Becher (2) und der Trinl<decl<el (3) durch Ultraschallschweissen miteinander verschweisst werden.

14. Verfahren nach einem der Ansprüche 6 bis 13, wobei vor dem Verschweissen von Becher (2) und Trinl<decl<el (3) eine Trinköffnung (40) im Trinl<decl<el (3) mittels einer Folie (7) verschlossen wird.

## Claims

1. Drinking container (1) made of plastic, with a cup (2) which has a cup opening (20A) pointing in a height direction (H) of the drinking container (1), and with a drinking lid (3) for closing the cup opening (20A), on which a skirt (37) is formed, which extends at least in sections along an outer circumference of the cup (2), **characterized in that** the cup (2) and the drinking lid (3) are welded together in the region of the cup opening (20A) and the skirt (37) is arranged at a distance from the outer circumference of the cup (2).

2. Drinking container (1) according to claim 1, **characterized in that** the cup (2) has, in the region of the cup opening (20A), a cup flange (24) which runs around the outside circumference and to which the drinking lid (3) is welded.

3. Drinking container (1) according to claims 1 or 2, **characterized in that** the drinking lid (3) has a lid flange (34) which runs around the outside circumference and with which the drinking lid (3) rests on an upper cup rim (25).

4. Drinking container (1) according to claim 3, **characterized in that** a lid welding surface (34A) of the drinking lid (3) rests on top of the cup rim (25).

5. Drinking container (1) according to one of the preceding claims, **characterized in** a collar (38) formed on the drinking lid (3), which extends at least in sections through the cup opening (20A) into the cup (2) and is arranged at a distance from an inner circumference of the cup (2).

6. Method for producing a drinking container (1) made of plastic, wherein a cup opening (20A) of a cup (2) pointing in a height direction (H) of the drinking container (1) is closed with a drinking lid (3), wherein a skirt (37) is formed on the drinking lid (3), which extends at least in sections along an outer circumference of the cup (2) and is arranged at a distance therefrom, wherein the cup (2) and the drinking lid (3) are welded together in the region of the cup opening (20A).

7. Method according to claim 6, wherein in the region of the cup opening (20A) in the unwelded state, a bead (29) is formed which surrounds the cup opening (20A) and serves as welding material, and wherein the cup (2) has, in the region of the cup opening (20A), a cup flange (24) which surrounds the outer circumference and to which the drinking lid (3) is welded.

8. Method according to claim 7, wherein the bead (29) is arranged in an outer edge region of the cup flange (24) and extends away from the cup flange (24) in the height direction (H).

9. Method according to claim 8, wherein the bead merges via a chamfer (26) into an outer circumferential side section (27) of the cup flange (24).

10. Method according to one of claims 7 to 9, wherein the bead (29) has a triangular cross-section in the unwelded state, wherein the bead (29) merges at a leg (29B) of the triangle into a cup welding surface 24A.

11. Method according to claim 10, wherein the cross-section of the bead (29) is designed as a right-angled triangle in the unwelded state.

12. Method according to one of claims 6 to 11, **characterized in that** the cup (2) and the drinking lid (3) are welded together in a filled state of the cup (2).

13. Method according to one of claims 6 to 12, **characterized in that** the cup (2) and the drinking lid (3) are welded together by ultrasonic welding.

14. Method according to one of claims 6 to 13, wherein, before the welding of the cup (2) and the drinking lid (3), a drinking opening (40) in the drinking lid (3) is closed by means of a foil (7).

## Revendications

1. Récipient pour boire (1) en matière plastique, avec un gobelet (2) qui présente une ouverture de gobelet (20A) orientée dans une direction de hauteur (H) du récipient pour boire (1), et avec un couvercle pour boire (3) pour fermer l'ouverture de gobelet (20A), sur lequel est fixée une jupe (37), qui s'étend au moins par sections le long d'une circonférence extérieure du gobelet (2), **caractérisé en ce que** le gobelet (2) et le couvercle pour boire (3) sont soudés l'un à l'autre dans la zone de l'ouverture de gobelet (20A), et la jupe (37) est disposée à distance de la circonférence extérieure du gobelet (2).

2. Récipient pour boire (1) selon la revendication 1, **caractérisé en ce que** le gobelet (2) présente, dans la zone de l'ouverture de gobelet (20A), une bride de gobelet (24) entourant la circonférence extérieure, sur laquelle est soudé le couvercle pour boire (3).

3. Récipient pour boire (1) selon les revendications 1 ou 2, **caractérisé en ce que** le couvercle pour boire (3) présente une bride de couvercle (34) entourant la circonférence extérieure, par laquelle le couvercle pour boire (3) est en appui sur un bord de gobelet (25) supérieur.

4. Récipient pour boire (1) selon la revendication 3, **caractérisé en ce qu'**une surface de soudure de couvercle (34A) du couvercle pour boire (3) est en appui sur le dessus du bord de gobelet (25).

5. Récipient pour boire (1) selon l'une des revendications précédentes, **caractérisé par** un col (38) formé sur le couvercle pour boire (3), qui s'étend au moins par sections à travers l'ouverture de gobelet (20A) dans le gobelet (2) et qui est disposé à distance d'une circonférence intérieure du gobelet (2).

6. Procédé de fabrication d'un récipient pour boire (1) en matière plastique, dans lequel une ouverture de gobelet (20A) d'un gobelet (2), orientée dans une direction de hauteur (H) du récipient pour boire (1), est fermée par un couvercle pour boire (3), dans lequel une jupe (37) est formée sur le couvercle pour boire (3), qui s'étend au moins par sections le long d'une circonférence extérieure du gobelet (2) et est disposée à distance de celui-ci, dans lequel le gobelet (2) et le couvercle pour boire (3) sont soudés ensemble dans la zone de l'ouverture de gobelet (20A).

7. Procédé selon la revendication 6, dans lequel, dans la zone de l'ouverture de gobelet (20A), à l'état non soudé, est formé un bourrelet (29) entourant l'ouverture de gobelet (20A), qui sert de matière de soudage, et dans lequel le gobelet (2) présente, dans la zone de l'ouverture de gobelet (20A), une bride de gobelet (24) entourant la circonférence extérieure, sur laquelle est soudé le couvercle pour boire (3).

8. Procédé selon la revendication 7, dans lequel le bourrelet (29) est disposé dans une zone de bord extérieure de la bride de gobelet (24) et s'étend dans la direction de hauteur (H) en s'éloignant de la bride de gobelet (24).

9. Procédé selon la revendication 8, dans lequel le bourrelet se prolonge par un chanfrein (26) dans une partie latérale (27) de la bride de gobelet (24) située sur la circonférence extérieure.

10. Procédé selon l'une des revendications 7 à 9, dans lequel le bourrelet (29) présente une section triangulaire à l'état non soudé, dans lequel le bourrelet (29) se prolonge par une surface de soudure de gobelet (24A) sur un côté (29B) du triangle.

11. Procédé selon la revendication 10, dans lequel la section transversale du bourrelet (29) à l'état non soudé est réalisée sous la forme d'un triangle rectangle.

12. Procédé selon l'une des revendications 6 à 11, **caractérisé en ce que** le gobelet (2) et le couvercle pour boire (3) sont soudés l'un à l'autre lorsque le gobelet (2) est rempli.

13. Procédé selon l'une des revendications 6 à 12, **caractérisé en ce que** le gobelet (2) et le couvercle pour boire (3) sont soudés ensemble par soudage à ultrasons.

14. Procédé selon l'une des revendications 6 à 13, dans lequel, avant de souder le gobelet (2) et le couvercle pour boire (3), une ouverture pour boire (40) dans le couvercle pour boire (3) est fermée au moyen d'un film (7).
